# EUROPÄISCHE PATENTSCHRIFT

(11) **EP 0 808 527 B1**
(45) Veröffentlichungstag und Bekanntmachung des Hinweises auf die Patenterteilung: **09.06.1999**
(21) Anmeldenummer: 96905845.2
(22) Anmeldetag: 01.03.1996
(51) Int. Cl.: H02K 41/03

(54) **ELEKTRISCHE MASCHINE**
ELECTRIC MACHINE
MACHINE ELECTRIQUE

(30) Priorität: 03.03.1995 DE 19507489; 03.03.1995 DE 19507490; 29.03.1995 DE 19511434; 15.11.1995 DE 29518104 U
(43) Veröffentlichungstag der Anmeldung: 26.11.1997
(73) Patentinhaber: Strothmann, Rolf, 66123 Saarbrücken (DE)
(72) Erfinder: STROTHMANN, Rolf, D-66123 Saarbrücken (DE); STROTHMANN, Thomas, D-49134 Wallenhorst (DE)
(74) Vertreter: Bernhardt, Winfrid, Dr.-Ing.
(86) Internationale Anmeldenummer: EP9600863
(87) Internationale Veröffentlichungsnummer: WO9627940

(56) Entgegenhaltungen:
- FR-A- 2 386 181
- FR-A- 2 434 505
- GB-A- 2 057 778
- US-A- 4 315 171
- I.E.E.E., Bd. MAG 23, Nr. 5, September 1987, NEW YORK, Seiten 2578-2580, XP002006204 K. HAYAFUNE; E. MASADA : "DYNAMICS OF THE PM TYPE LINEAR SYN. MOTOR FOR MAGN. LEVITATED CARRIER VEHICLE"
- PATENT ABSTRACTS OF JAPAN Bd. 014, Nr. 268 (E-0939) 11 Juni 1990 & JP,A,02 083 903 (ASAHI CHEM IND CO LTD) 26 März 1990

## Beschreibung

Die vorliegende Erfindung betrifft eine elektrische Maschine mit einer fremderregten Läuferordnung für die Erzeugung von in der Läuferbewegungsrichtung aufeinanderfolgenden, jeweils ganzen magnetischen Perioden entsprechenden Magnetfeldern und mit entlang der Läuferanordnung aufeinanderfolgend angeordneten Statorpolen.

Eine elektrische Maschine mit den in den Oberbegriffen der Ansprüche 1 und 9 definierten Merkmalen ist durch die US-A-4 315 171 offenbart.

Es sind derartige elektrische Maschinen mit einem fremderregten Läufer (oder Stator, in diesem Fall sind die Begriffe Läufer und Stator sinngemäß austauschbar) bekannt, bei welchen die den ganzen magnetischen Perioden entsprechenden Magnetfelder durch einzelne, voneinander getrennte Pole, einem Nord- und Südpol (je magnetischer Periode) gebildet sind. Entsprechend der Anzahl der durch die Läuferpolpaare gebildeten Magnetfelder sind hinsichtlich Anordnung und Anzahl der Statorpole übereinstimmende Statorpolsätze vorgesehen, so daß sich unter jedem Läuferpolpaar übereinstimmende Anordnungen von Statorpolen befinden. Für die Läuferpole können z.B. Permanentmagneten verwendet werden.

Bedingt durch Streufluß und insbesondere die Lücken zwischen den Läuferpolen bildet sich bei derartigen Maschinen ein solches Läuferfeld aus, daß bei einer Bewegung des Läufers gegen den Stator eine nicht lineare Variation der an den Läuferpolen ansetzenden, von der Summe der an den Polen herrschenden Feldbeträge abhängigen Kräfte ergibt. Letztlich resultiert daraus ein Eigenrastverhalten, d.h. es tritt ein Selbsthaltemoment (auch Rastmoment oder Cogging genannt) auf. Besonders ausgeprägt ist dieses Eigenrastverhalten in langsamen Leerlauf. Dieser Effekt tritt insbesondere deshalb auf, weil sich durch die stets gleichen Verhältnisse innerhalb der einzelnen magnetischen Perioden des Läuferfeldes die sich nicht linear ändernden Kräfte über die Gesamtlänge des Stators bzw. Läufers addieren. In Verbindung mit dem Eigenrastverhalten ergeben sich weitere Nachteile solcher Maschinen wie unruhiger Lauf, Vibrationen, die Notwendigkeit des Betriebs der Maschinen mit Mindestdrehzahlen usw..

Da hinsichtlich Variationen der Form von Stator und Läuferpolen enge Grenzen gesetzt sind, ist eine Reduzierung des Selbsthaltemoments nur mit Hilfe von Pol- oder Blechpaketschränkungen, Vergrößerungen des Luftspalts oder durch eine spezielle Ausbildung der Polkopfform möglich. Durch die genannten Maßnahmen werden jedoch die Betriebsparameter der Maschine beeinträchtigt, so daß eine durch solche Maßnahmen in ihrem Eigenrastverhalten verbesserte Maschine einen ungünstigen Kompromiß darstellt.

Es ist die Aufgabe der vorliegenden Erfindung, eine elektrische Maschine der eingangs erwähnten Art zu schaffen, deren Selbsthaltemoment eliminiert oder wenigstens reduziert ist.

Gemäß einer ersten erfindungsgemäßen Lösung dieser Aufgabe ist eine elektrische Maschine vorgesehen, die dadurch gekennzeichnet ist, daß auf eine magnetische Periode eine von einer ganzen Zahl abweichende Zahl von Statorpolen entfällt.

Entsprechend dieser Erfindungslösung ergeben sich unterschiedliche Anordnungen von Statorpolen relativ zu den einzelnen, ganzen magnetischen Perioden entsprechenden Magnetfeldern, so daß sich nicht linear verändernde, an den Läuferpolen ansetzende Kräfte, die zu einem Selbsthaltemoment führen könnten, sich nicht unter Vervielfachung über die Stator- bzw. Läuferlänge addieren, sondern unter Reduzierung bzw. Eliminierung des Selbsthaltemoments gegenseitig aufheben. Entsprechend der von einer ganzen Zahl abweichenden, auf eine magnetische Periode entfallenden Zahl von Statorpolen ergibt sich ein variierender Versatz zwischen den einzelnen, den ganzen magnetischen Perioden entsprechenden Magnetfeldern und den diesen gegenüber angeordneten Statorpolen, so daß an den verschiedenen Läuferpolen unterschiedlich ausgerichtete Kräfte angreifen, die sich über die Länge bzw. den Umfang des Stators oder Läufers ausmitteln können.

Entsprechend der Abweichung von der ganzen Zahl ist eine Periodizität in der räumlichen Anordnung der Statorpole relativ zu den Magnetfeldperioden innerhalb der Läufer bzw. Statorlänge vermieden. Damit treten keinerlei Wiederholungen in den räumlichen Relationen zwischen den Magnetfeldern und Statorpolen auf, so daß kein Rastmomente verstärkender Additionseffekt auftreten kann.

Vorteilhaft kann bei der Konstruktion der erfindungsgemäßen elektrischen Maschine vollständig auf Standardmaterialien und -bauteile zurückgegriffen werden.

Nach der Erfindung ist eine zeitversetzte Speisung der Statorpole zum Ausgleich des durch das Abweichen der auf eine Magnetfeldperiode entfallenden Zahl von Statorpolen von einer ganzen Zahl bedingten variierenden räumlichen Versatzes zwischen den Magnetfeldern und den Statorpolen vorgesehen. Durch diese Maßnahme werden Beeinträchtigungen der Motorleistung ausgeglichen, indem durch die den Versatz berücksichtigende zeitversetzte Speisung dafür gesorgt wird, daß die Statorpole eine von ihrem Versatz weitgehend unabhängigen Beitrag zu der das Motordrehmoment erzeugenden Gesamtkraft liefern.

Eine weitere, die obengenannte Aufgabe lösende elektrische Maschine nach der Erfindung ist dadurch gekennzeichnet, daß die aufeinanderfolgenden, jeweils einer ganzen magnetischen Periode entsprechenden Magnetfelder durch abwechselnd einen magnetischen Nord- und Südpol aufweisende Permanentmagnetabschnitte gebildet sind, wobei zwischen den Permanentmagnetabschnitten Trennspalte vorgesehen sind, die mit abwechselnd entgegengesetztem Neigungswinkel schräg zur Läuferbewegungsrichtung verlaufen.

Auch durch diese erfindungsgemäße Lösung wird ein Mittelungseffekt erzielt, in dem sich bedingt durch die Verläufe der Trennspalte Kraftbeträge, durch die ein Haltemoment gebildet werden könnte, gegenseitig wenigstens teilweise aufheben.

In vorteilhafter Ausgestaltung dieser weiteren erfindungsgemäßen Lösung ist vorgesehen, daß die Trennspalte Teile eines einzigen durchgehenden Trennspalts sind, durch den sich in Bewegungsrichtung durchgehend erstreckende, die Permanentmagnetabschnitte enthaltende Magnetkörper voneinander getrennt werden, wobei einer der Magnetkörper die Magnetelemente für die Nordpole und der andere die Magnetelemente für die Südpole umfaßt. Insbesondere kann der durchgehende Trennspalt in der Form einer Sinuskurve ausgebildet sein. Durch diesen durchgehenden Trennspalt werden Unstetigkeiten im Feldverlauf zwischen den entgegengesetzten Polen geeignet ausgeglichen, was zu einer weiteren Reduzierung des Selbsthaltemoments beiträgt.

Weitere vorteilhafte Ausgestaltungsmöglichkeiten der Erfindung gehen aus den Unteransprüchen hervor.

Die Erfindung soll nun anhand von Ausführungsbeispielen und der beiliegenden, sich auf diese Ausführungsbeispiele beziehenden Zeichnungen näher erläutert und beschrieben werden.

Es zeigen:
- Fig. 1: ein erstes Ausführungsbeispiel für die vorliegende Erfindung,
- Fig. 2: eine das erste Ausführungsbeispiel gemäß Fig. 1 erläuternde Darstellung einer elektrischen Maschine mit übereinstimmenden Anzahlen von Läuferpolpaaren und Statorpolsätzen,
- Fig. 3: das Ausführungsbeispiel von Fig. 1 in einer zu der Ansicht von Fig. 1 senkrechten Betrachtungsrichtung (ausgeschnitten),
- Fig. 4: ein zweites Ausführungsbeispiel für eine erfindungsgemäße elektrische Maschine,
- Fig. 5: ein drittes Ausführungsbeispiel für eine erfindungsgemäße elektrische Maschine,
- Fig. 6: das Ausführungsbeispiel von Fig. 5 in einer Ansicht gemäß der Schnittlinie 1-1 von Fig. 5 und
- Fig. 7: ein viertes Ausführungsbeispiel für eine erfindungsgemäße elektrische Maschine.

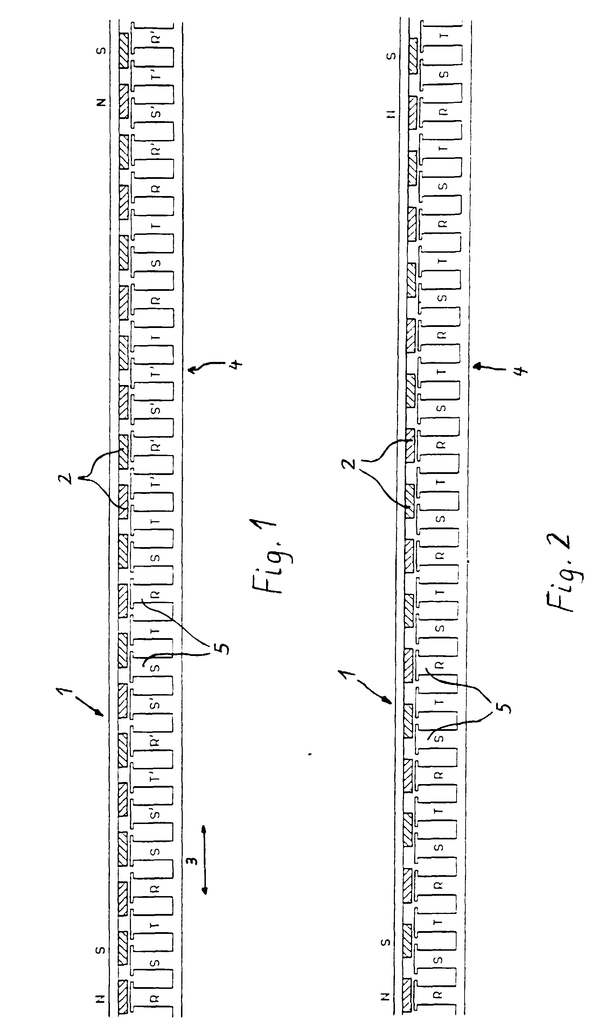

Mit dem Bezugszeichen 1 ist in den Fig. 1 bis 3 ein Läufer einer Elektromaschine bezeichnet. Der Läufer enthält Permanentmagnete 2. Die Permanentmagnete 2 sind entsprechend Bewegungsrichtungen des Läufers, die durch einen Doppelpfeil 3 gekennzeichnet sind, mit konstantem Zwischenabstand aneinandergereiht. Den Nord- und Südpolen 2 des Läufers 1 gegenüberliegend ist ein Stator 4 angeordnet, welcher Statorpole 5 aufweist, die in den Bewegungsrichtungen des Läufers 1 mit konstantem Zwischenabstand aneinandergereiht sind. Die Statorpole 5 sind mit in den Fig. 1 bis 3 nicht gezeigten Statorwicklungen versehen.

Zur Vereinfachung ist in den Fig. 1 bis 3 eine Linearmaschine dargestellt. Die Darstellungen können aber auch als Abwicklung des Läufers und Stators einer Rotationsmaschine angesehen werden. Gemäß dem in der Fig. 1 gezeigten Ausführungsbeispiel weist die elektrische Maschine insgesamt zwanzig Permanentmagnete zur Bildung von zehn, jeweils einen magnetischen Nord- und Südpol enthaltenden Läuferpolpaaren auf.

Den zehn, jeweils eine Magnetfeldperiode bildenden Läuferpolpaaren stehen insgesamt siebenundzwanzig Statorpole gegenüber, so daß auf ein Läuferpolpaar die nicht ganze Zahl 2,7 von Statorpolen entfällt. In der Darstellung gemäß Fig. 2 enthält der Läufer neun Läuferpolpaare. Hier beträgt die Zahl der auf ein Läuferpolpaar entfallenden Statorpole 3.

Wie aus einem Vergleich der Fig. 1 und 2 ersichtlich ist, ergibt sich bei ganzzahligem Quotienten aus der Zahl der Statorpole und der Zahl der Läuferpolpaare eine sich über die Länge des Stators bzw. Läufers wiederholende räumliche Beziehung zwischen Statorpolen und Läuferpolpaaren, während bei dem von der geraden Zahl abweichenden Quotienten ein sich von Statorpol zu Statorpol ändernder Versatz zwischen den Statorpolen und Permanentmagneten auftritt. In dem in Fig. 1 gezeigten Ausführungsbeispiel ergibt sich daher innerhalb der Statorlänge keine periodisch wiederkehrende räumliche Relationsbeziehung zwischen Permanentmagneten und Statorpolen.

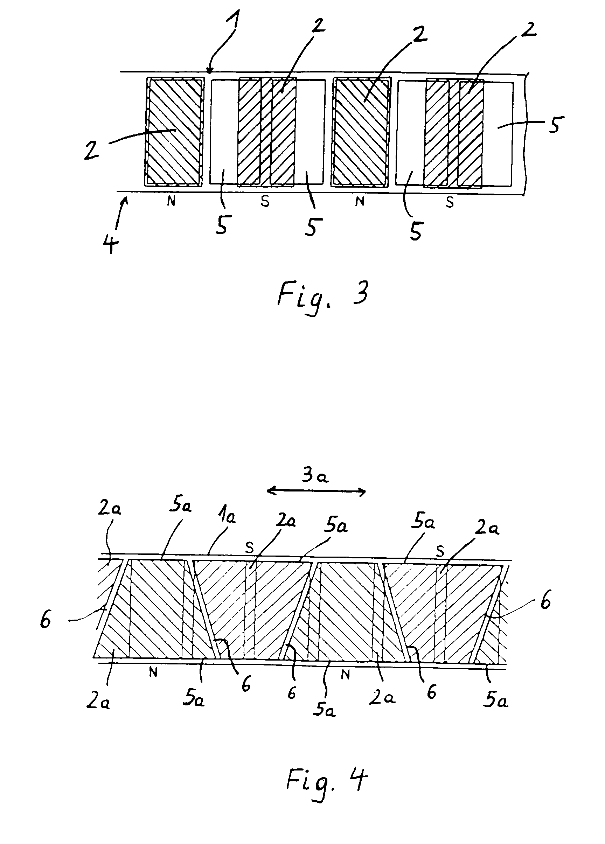

Die Speisung der Statorpole des in den Fig. 1 und 3 gezeigten Ausführungsbeispiels einer elektrischen Maschine erfolgt mittels einer dreiphasigen Speisewechselspannung, wobei an den Windungen der mit dem Buchstaben R bezeichneten Statorpole eine 0°-Phase, an den Windungen der mit S bezeichneten Statorpole eine 120°-Phase und an den Windungen der mit T bezeichneten Statorpole eine 240°-Phase der Speisewechselspannung anliegt. Die Windungen der mit R', S' und T' bezeichneten Statorpole sind in eine Verpolungsschaltung, im einfachsten Fall mittels einfacher Verpolung, derart eingebunden, daß sich aus den drei genannten Phasen für diese Windungen weitere Phasen ergeben, wobei an den Windungen der mit T' bezeichneten Statorpole eine 60°-Phase, an den Windungen der mit R' bezeichneten Statorpole eine 180°-Phase und an den Windungen der mit S' bezeichneten Pole eine 300°-Phase liegt. Damit stehen zur Speisung aller Statorpole insgesamt sechs verschiedene Phasen mit gegenüber der dreiphasigen Speisewechselspannung halbierten Phasensprüngen zur Verfügung.

Beim Betrieb der in den Fig. 1 und 3 gezeigten elektrischen Maschine sorgt der variierende Versatz der Statorpole gegen die Läuferpaare dafür, daß sich solche an den jeweiligen Läuferpolen ansetzenden Kräfte, die zu einem Selbsthaltemoment führen würden, ausmitteln. Bei der in Fig. 2 gezeigten Maschine, in der sich die gleiche räumliche Relationsbeziehung zwischen Läufer- und Statorpolen nach jeweils drei Statorpolen wiederholt, wirken dagegen sämtliche Kräfte im gleichen Sinn, und es wird ein Selbsthaltemoment erzeugt.

Durch den variierenden Versatz der Statorpole gegen die Läuferpole kommt es andererseits dazu, daß die Polphasen der dreiphasigen Speisespannung nach einer gewissen Stator- bzw. Läuferlänge nicht mehr den jeweiligen räumlichen Positionen der Statorpole innerhalb der gerade durchlaufenen magnetischen Perioden angepaßt wären, denn die ähnliche Position der Statorpole innerhalb der magnetischen Perioden ist maßgebend für den die Wicklungen auf den Statorpolen durchsetzenden Flußverlauf und über dessen Ableitung nach der Zeit auch maßgebend für den Spannungsverlauf in den Wicklungen.

Hier wird ein Ausgleich dadurch geschaffen, daß durch geeignete Verschaltung der in Sternschaltung angeordneten Wicklungen der Statorpole ein Teil der Statorpole mit Phasen gespeist werden, die gegen die Phasen der dreiphasigen Speisewechselspannung um jeweils 60° versetzt sind. Damit stehen gegenüber den nur drei primären Phasen der Speisewechselspannung Phasen in feinerer Abstimmung zur Verfügung, die geeignet sind, den variierenden Versatz der Statorpole gegen die Läuferpole so auszugleichen, daß über die Länge des Läufers annähernd gleichverteilt das Motordrehmoment erzeugende, an den Läuferpolen ansetzende Kräfte entstehen, so daß der Lauf der Maschine trotz des beschriebenen Versatzes der Pole nicht beeinträchtigt ist. Die sich bei dem in den Fig. 1 und 3 gezeigten Ausführungsbeispiel nur noch ergebenden Fehlwinkel gehen aus der nachfolgenden Tabelle hervor:
6 Phasen, 27 Statorpole, 10 Rotorpolpaare bzw. 20 Rotorpole
Darstellung stationärer Zustand, Statorpol 1 = 0° = Referenzphase R
Alle Winkel in Grad

| Statorpol | mech. Winkel | elek. Winkel | Phase | Fehlwinkel |
|---|---|---|---|---|
| 1 | 0.000 | 0.000 | R | 0.000 |
| 2 | 13.333 | 133.333 | S | 13.333 |
| 3 | 26.667 | 266.667 | T | 26.667 |
| 4 | 40.000 | 40.000 | R | 40.000 |
| 5 | 53.333 | 173.333 | S | 53.333 |
| 6 | 66.667 | 306.667 | S' | 6.667 |
| 7 | 80.000 | 80.000 | T' | 20.000 |
| 8 | 93.333 | 213.333 | R' | 33.333 |
| 9 | 106.667 | 346.667 | S' | 46.667 |
| 10 | 120.000 | 120.000 | S | 0.000 |
| 11 | 133.333 | 253.333 | T | 13.333 |
| 12 | 146.667 | 26.667 | R | 26.667 |
| 13 | 160.000 | 160.000 | S | 40.000 |
| 14 | 173.333 | 293.333 | T | 53.333 |
| 15 | 186.667 | 66.667 | T' | 6.667 |
| 16 | 200.000 | 200.000 | R' | 20.000 |
| 17 | 213.333 | 333.333 | S' | 33.333 |
| 18 | 226.667 | 106.667 | T' | 46.667 |
| 19 | 240.000 | 240.000 | T | 0.000 |
| 20 | 253.333 | 13.333 | R | 13.333 |
| 21 | 266.667 | 146.667 | S | 26.667 |
| 22 | 280.000 | 280.000 | T | 40.000 |
| 23 | 293.333 | 53.333 | R | 53.333 |
| 24 | 306.667 | 186.667 | R' | 6.667 |
| 25 | 320.000 | 320.000 | S' | 20.000 |
| 26 | 333.333 | 93.333 | T' | 33.333 |
| 27 | 346.667 | 226.667 | R' | 46.667 |

Wie der Tabelle entnommen werden kann, wird der maximal mögliche Winkelfehler von 60° bei dem betreffenden Ausführungsbeispiel nicht erreicht.

Weitere Reduzierungen der in der Tabelle angegebenen Fehlwinkel sind möglich, indem die Maschine mit einer kombinierten Bewicklung versehen wird. Im vorliegenden Beispiel eines Drei-Phasen-Systems können beispielsweise die bekannten Stern- und Dreieckschaltungen gemeinsam verwandt werden. In der Dreieckschaltung ist die Wicklungsspannung die verkettete Strangspannung, d.h. Differenzspannung zweier Phasen. Dadurch entsteht neben einer betragsmäßig größeren Wicklungsspannung aber auch ein Phasenversatz von 30° zum Sternsystem. Zusammen mit der obigen Sternschaltung können daher insgesamt zwölf Phasen erzeugt werden, d.h. der maximale elektrische Winkelfehler bei Verwendung dieses Systems reduziert sich auf 30 bzw. ± 15 °. Die geeignete Verschaltung wird gefunden, indem zum Versatz eines Statorpols die jeweils am besten passende Phase, d.h. die Phase mit der geringsten Phasenabweichung ausgewählt wird. Bei der Bewicklung ist lediglich darauf zu achten, daß selbst nur geringfügig elektrisch in der Phase versetzte Wicklungen nicht parallel, sondern in Reihe geschaltet werden, da sonst erhebliche Ausgleichsströme fließen würden. Sind innerhalb der jeweiligen Phase mehrere dieser elektrisch versetzten Wicklungen beteiligt, so führt dies zudem zu einer wünschenswerten Betonung der Sinusgrundwelle der Summenphasenspannungen. Die durch die einzelnen Phasenverschiebungen beschriebene Synchronisation schwächt die Oberwellenanteile der Summenspannung gegenüber nicht auf die beschriebene Weise versetzten Polanordnungen ab.

Die erläuterten Effekte treten bei Hochpolmaschinen besonders vorteilhaft in Erscheinung, da hier feinere Polversätze des Eigenrastverhaltens stärker reduzieren und mehr Pole an den Phasenspannungen beteiligt sind. Hierzu zählen z.B. langsam laufende Maschinen, Maschinen mit großem Rotordurchmesser, wie z.B. Fahrmotoren und Servomotoren.

Bei den weiteren in den Fig. 4 bis 7 gezeigten Ausführungsbeispielen sind gleiche oder gleichwirkende Teile mit der gleichen, jedoch mit dem Buchstaben a, b bzw. c versehenen Bezugszahl bezeichnet.

Bei dem in der Fig. 4 gezeigten Ausführungsbeispiel sind mit einem Läufer 1a verbundene Permanentmagnete 5a in Läuferbewegungsrichtung entsprechend dem Pfeil 3a aneinandergereiht, wobei sich einen magnetischen Nordpol und einen magnetischen Südpol bildende Permanentmagnetabschnitte abwechseln. Durch ein Polpaar wird ein einer vollständigen magnetischen Periode entsprechendes Läufermagnetfeld gebildet. Zwischen den einzelnen Permanentmagneten 2a sind Trennspalte vorgesehen, die schräg zur Bewegungsrichtung verlaufen und dabei abwechselnd im entgegengesetzten Winkel zur Bewegungsrichtung 3a geneigt sind. Den Permanentmagneten 2a stehen Statorpole 5a gegenüber, wobei auf jedes Läuferpolpaar ein Satz von drei Statorpolen 5a entfällt. Die Statorpole eines Satzes sind jeweils mit einer dreiphasigen Wechselspannung gespeist, wobei jeder Statorpol mit einer Wicklung für jeweils eine der drei Phasen versehen ist.

Durch den schrägen Verlauf der Trennspalte mit abwechselnd entgegengesetztem Neigungswinkel zur Bewegungsrichtung wird ebenfalls eine Verringerung des Selbsthaltemoments erreicht, indem sich zum Selbsthaltemoment beitragende, an den Läuferpolen ansetzende Kräfte ausmitteln.

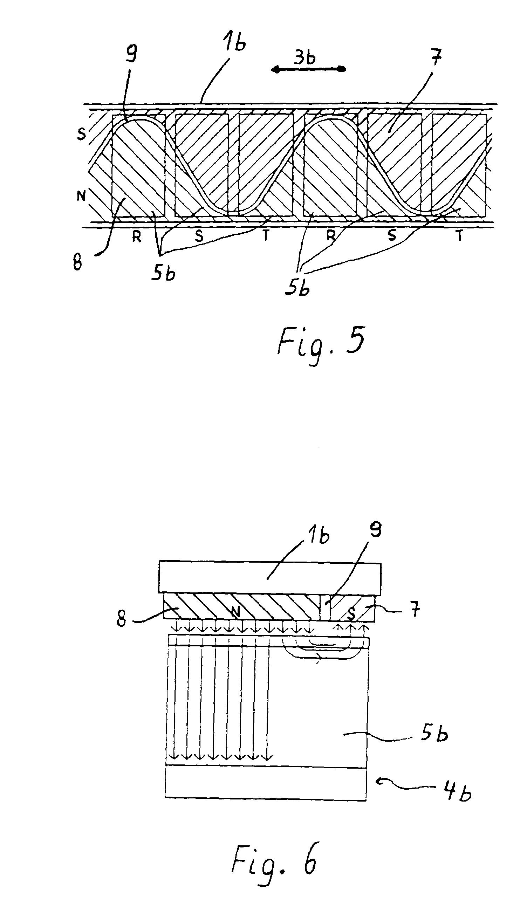

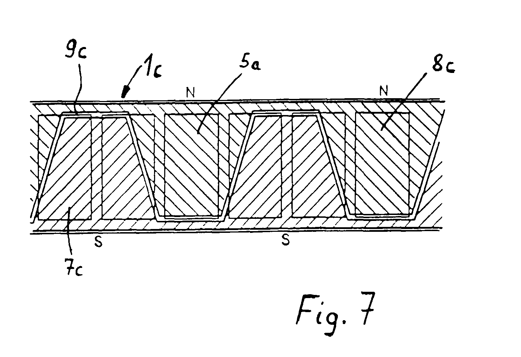

Das Ausführungsbeispiel von Fig. 5 bzw. 6 unterscheidet sich von dem vorangehenden Ausführungsbeispiel dadurch, daß nicht mehrere Trennspalte zwischen Permanentmagneten gebildet sind, sondern ein einziger durchgehender Trennspalt 9 zwischen sich in einer Bewegungsrichtung 3b eines Läufers 1b erstreckenden Magnetkörpern 7 und 8 gebildet ist. Der Magnetkörper 7 dient zur Bildung magnetischer Südpole, während der Magnetkörper 8 zur Bildung magnetischer Nordpole vorgesehen ist. Der durchgehende Trennspalt hat einen sinusförmigen Verlauf. In dem Ausführungsbeispiel von Fig. 7 ist der sinusförmige Trennspalt 9 durch einen trapezförmigen Trennspalt 9c ersetzt. Bei dem in den Fig. 5 bis 7 gezeigten Ausführungsbeispielen mit ununterbrochenem Trennspalt 9 treten im Unterschied zu der Anordnung von Fig. 4 keine durch die Unterbrechung des Trennspalts bedingten Unstetigkeiten auf. Durch Variation der Spaltposition quer zur Bewegungsrichtung kann bedingt durch die Addition der den Statorpol durchsetzenden, an den Läuferpolen erzeugten und vorzeichenbehafteten Feldanteile eine Veränderung des jeweils resultierenden, den Stator durchsetzenden Statorflusses ermöglicht werden. Damit können durch einen geeigneten, periodischen Verlauf der Spaltposition in Abhängigkeit von der Läuferposition die gewünschten Kurvenformen für die Hilfsverläufe in den Statorpolen und somit die Funktionsverläufe der Phasenspeisungen eingestellt werden. Unabhängig hiervon können durch Variationen der Fläche der beiden Läuferpole, bedingt durch die Addition der zwischen Läufer- und Statorpolen herrschenden Feldbeträge, die an den Statorpolen angreifenden Kräfte in Abhängigkeit von der Läuferposition variiert werden, um das Eigenrastverhalten der Maschine zu beeinflussen. Spezielle Statorpolformen sind nicht erforderlich.

Sofern die Auslegung einen vollständig rastmomentfreien Betrieb erfordert, müssen bei beliebiger Positionierung des Läufers lediglich die aus der Sicht der Statoren aktiven Feldbeträge allgemein über einem feststehenden Intervall konstant bleiben. Die aktiven Flächenanteile der beiden Läuferpole eines Intervalls sind, als Auslegungsrichtlinie, etwa proportional zu den oben beschriebenen Feldanteilen. Durch das über die Bewegung stetige Konstanthalten der oben genannten Feldbeträge können auch die an den Statorpolen angreifenden Kräfte konstant gehalten werden, so daß ein Selbsthaltemoment völlig beseitigt werden kann.

Die Differenz der Flächenanteile bzw. die Summe der am Pol angreifenden Felder (gemäß Definition bildet der Nordpol den positiven Feldvektor und der Südpol den negativen Feldvektor) bestimmt dagegen den auch nach außen hin relevanten, residualen Fluß durch den gesamten betreffenden Statorpol; die Zeitableitung dieses Flusses ist dann z.B. der Spannung an der auf dem Pol befindlichen Wicklung proportional. Eine entsprechende Anordnung der Läuferpole und entsprechende Ausbildung des Spaltverlaufs in Abhängigkeit von der Läuferposition dient so der Erzeugung bestimmter Flußverläufe, die letztlich die gewünschten Strom- und Spannungsverläufe an den Phasen prägen.
Die beschriebenen Verhältnisse sind in Fig. 6 veranschaulicht. Ein bestimmter Teil der beiden durch die Läuferpole erzeugten Flüsse durchsetzt nur den Polkopf und wird dadurch hinsichtlich des Gesamtflusses durch den Pol kompensiert. Er hält dabei aber unabhängig von der Position des Läufers und somit des Trennspalts die am Pol angreifende Kraft stets aufrecht und konstant. Der nach der Kompensation verbleibende, dargestellte Gesamtfluß wird dagegen direkt von der Position des Trennspalts abhängig sein und z.B. in der Polwicklung wirksam werden. Diese Kriterien werden von einer Vielzahl von Läuferpolformen erfüllt. Im Falle einer einfachen und kostengünstigen Lösung werden bestimmte Kurvenverläufe nur angenähert. Zum Beispiel stellt der in Fig. 7 gezeigte Trennspalt eine Annäherung an den sinusförmigen Trennspalt gemäß Fig. 4 dar. Es ist leicht zu erkennen, daß diese Lösung die übrigen Leistungsdaten der Maschine kaum beeinträchtigt, wohl aber das Selbsthaltemoment vollständig beseitigen kann.

Die durch den durchgehenden Trennspalt entstehenden Flußverluste sind meist wesentlich geringer als diejenigen, die durch die bekannten, oben beschriebenen Maßnahmen zur Reduzierung des Selbsthaltemoments, wie Schränkungen, Luftspaltvergrößerung usw., bewirkt werden.

Bei dem in Fig. 4 gezeigten Ausführungsbeispiel können durch die Unterbrechung des Trennspalts und dadurch bedingte Unstetigkeiten zwar noch geringe Rastmomente erzeugt werden, aber dafür können bei dieser Anordnung die maximal möglichen Leistungswerte der Maschine erreicht werden. Bei dem gezeigten Ausführungsbeispiel wären Symmetriebrüche im Statorkörper ohne die sonst üblichen, nachteiligen Auswirkungen auf das Maschinenverhalten möglich. Insbesondere Linearmaschinen weisen gegenüber Rotationsmaschinen eine endliche Statorlänge in Bewegungsrichtung auf und können so von der gebotenen Möglichkeit profitieren. Weitere mögliche Ausgestaltungen betreffen die Anordnung bestimmter Konstruktionselemente im frei gewordenen Bereich des Stators. Dazu zählen beispielsweise Bremsen, die direkt auf den Rotoraußendurchmesser wirken und demzufolge hohe Bremsmomente bei kleiner Betätigungskraft erzeugen können. Weitere Ausgestaltungen betreffen die Erfassung oder Beeinflussung des in diesem Raum vorhandenen, vom Statorfeld weitestgehend unbeeinflußten Läuferfeldes. Es können zusätzliche, vom Läuferfeld beeinflußte oder das Läuferfeld beeinflussende Bauteile in diesen Raum eingebracht werden. Vorteilhaft könnte dort eine Einrichtung zur Läuferpositionserfassung angeordnet werden, die magnetisch empfindliche Halbleiter, insbesondere Hallsensoren, enthalten und auf diese Weise ohne eine eigene, spezielle Polanordnung auskommen kann.
Aber auch die Beeinflussung des Läuferfeldes kann Vorteile bringen, wobei diese Wirkung frequenzabhängig sein kann, wie bei einer Wirbelbremse, aber auch positionsabhängig und periodisch, wie bei zusätzlichen Magnetpolen der ferromagnetische Teile, die durch entsprechende Ausgestaltung ein eigenes, dann gewünschtes Rastverhalten erzeugen können.

Auf diese Weise kann beispielsweise die in Fig. 4 gezeigte Polanordnung zugunsten maximalen Drehmoments genutzt werden, wobei mit einer geeigneten, das Läuferfeld beeinflussenden Konstruktion ein noch auftretendes geringes Haltemoment kompensiert werden kann.

Jede Phase beansprucht in den beschriebenen Maschinenausführungen nur einen einzigen Statorpol pro magnetischer Periode. Die vorzusehende Läuferpolbreite muß zur Erzeugung maximalen Flusses im Statorpol wenigstens ebenso breit sein. Da aber nur zwei Läuferpole zur Anwendung kommen, sind die Polbereiche entsprechend schmal. Dadurch wird der Einsatz von Magnetmaterial bei Permanentmagnetenmaschinen erheblich verringert. Durch die symmetrische Konstruktion, die die Phasen geichmäßig auf die Maschine verteilt, ist die Empfindlichkeit gegenüber Toleranzen und die Geräuschentwicklung gering.

Da jeder Statorpol nur eine Wicklung trägt, können letztere bei Bedarf optimal vorgefertigt und anschließend einzeln aufgebracht werden.

Die einzelnen Statorpole sind kompakt ausgeführt, und die darauf befindlichen Wicklungen sind hinsichtlich der Windungslänge so kurz wie möglich vorgesehen, wobei der Wicklungskopf äußerst klein gehalten werden kann, so daß bei geringem Gewicht und kleiner Bauform der Wirkungsgrad der Maschine hoch ist.

Die in den Fig. 1 und 3 gezeigte Maschine kann weiterhin durch bestimmte Ausgestaltungen der Läuferpole in ihren Betriebseigenschaften beeinflußt werden. Beispielsweise ist eine einfache Schränkung der Läuferpole möglich, um unter Beibehaltung der maximalen Leistungsdaten die elektrischen Verläufe der Speisung anzupassen und das Eigenrastmoment weiter zu verringern.

## Patentansprüche

1. Elektrische Maschine mit einer fremderregten Läuferanordnung (1) für die Erzeugung von in der Läuferbewegungsrichtung (3) aufeinanderfolgenden, jeweils ganzen magnetischen Perioden entsprechenden Magnetfeldern, und mit entlang der Läuferanordnung aufeinanderfolgend angeordneten Statorpolen (5), wobei auf eine magnetische Periode eine von einer ganzen Zahl abweichende Zahl von Statorpolen entfällt,
dadurch gekennzeichnet,
daß ein durch die Abweichung bedingter, variierender Versatz zwischen den Magnetfeldperioden und den Statorpolen wenigstens teilweise durch eine entsprechend zeitversetzte Speisung der Statorpolwicklungen ausgeglichen ist.

2. Maschine nach Anspruch 1,
dadurch gekennzeichnet,
daß zur zeitversetzten Speisung Schaltungen zur Erzeugung weiterer Speisespannungsphasen aus einer mehrphasigen Speisespannung vorgesehen sind.

3. Maschine nach Anspruch 2,
dadurch gekennzeichnet,
daß die Schaltungen durch geeignete Verschaltung von Statorpolwicklungen gebildet sind.

4. Maschine nach Anspruch 3,
dadurch gekennzeichnet,
daß Stern- oder/und Dreiecksschaltungen umfassende Verschaltungen zur Erzeugung weiterer Phasen aus einer dreiphasigen Speisespannung vorgesehen sind.

5. Maschine nach einem der Ansprüche 1 bis 4,
dadurch gekennzeichnet,
daß die Läuferpole durch Permanentmagnete (2) gebildet sind.

6. Maschine nach einem der Ansprüche 1 bis 5,
dadurch gekennzeichnet,
daß mehrere, jeweils die gleiche Zahl von Statorpolen (5) aufweisende und jeweils durch mehrere Phasen einer Speisespannung gespeiste Statorpolsätze vorgesehen sind.

7. Maschine nach Anspruch 6,
dadurch gekennzeichnet,
daß Statorpolsätze mit einer der Anzahl der Phasen einer Speisespannung entsprechenden Zahl von Statorpolen (5) vorgesehen sind.

8. Maschine nach Anspruch 6 oder 7,
dadurch gekennzeichnet,
daß jeder Statorpol (5) eines Statorpolsatzes jeweils eine Wicklung für jeweils eine Speisespannungsphase aufweist.

9. Elektrische Maschine mit einer fremderregten Läuferanordnung (1) für die Erzeugung von in der Läuferbewegungsrichtung (3) aufeinanderfolgenden, jeweils einer ganzen magnetischen Periode entsprechenden Magnetfeldern, und mit entsprechend den Magnetfeldern aufeinanderfolgend angeordneten Statorpolen,
dadurch gekennzeichnet,
daß die aufeinanderfolgenden, jeweils einer ganzen magnetischen Periode entsprechenden Magnetfelder durch abwechselnd einen magnetischen Nord- und Südpol aufweisende Permanentmagnetabschnitte gebildet sind, wobei zwischen den Permanentmagnetabschnitten Trennspalte vorgesehen sind, die mit abwechselnd entgegengesetztem Neigungswinkel schräg zur Läuferbewegungsrichtung verlaufen.

10. Maschine nach Anspruch 9,
dadurch gekennzeichnet,
daß die Trennspalte Teile eines einzigen durchgehenden Trennspaltes (9) sind, durch den sich in Bewegungsrichtung erstreckende, die Permanentmagnetabschnitte enthaltende Magnetkörper (7,8) voneinander getrennt werden, von denen einer die Magnetelemente für die Nordpole und der andere die Magnetelemente für die Südpole umfaßt.

11. Maschine nach Anspruch 10,
dadurch gekennzeichnet,
daß der durchgehende Trennspalt die Form einer Sinuskurve (9b) oder Trapezkurve (9c) aufweist.

12. Maschine nach einem der Ansprüche 9 bis 11,
dadurch gekennzeichnet,
daß die Trennspalte (6) bzw. der durchgehende Spalt (9) in der Spaltbreite variieren.

13. Maschine nach einem der Ansprüche 9 bis 12,
dadurch gekennzeichnet,
daß aus einer den aufeinanderfolgenden Magnetfeldern entsprechenden Reihe von Statorpolen unter Bildung eines elektrisch oder/und mechanisch unsymmetrischen Maschinenaufbaus ein oder mehrere Statorpole entfernt sind.

## Claims

1. Electric machine with a separately excited rotor arrangement (1) for the generation of magnetic fields which follow one another in the movement direction (3) of the rotor, each magnetic field corresponding to a whole magnetic period, and with stator poles (5) which are arranged so as to follow one another along the rotor arrangement, wherein a number of stator poles which is not a whole number is allotted to a magnetic period,
characterized in that a varying offset between the magnetic field periods and the stator poles which is caused by the difference is at least partly compensated for by a correspondingly time-delayed supply of the stator pole windings.

2. Machine according to claim 1, characterized in that circuits for generating additional supply voltage phases from a multiple-phase supply voltage are provided for the time-delayed supply.

3. Machine according to claim 2, characterized in that the circuits are formed a by suitable connection of stator pole windings.

4. Machine according to claim 3, characterized in that connections comprising star-connections or/and delta connections are provided for generating additional phases from a three-phase supply voltage.

5. Machine according to one of claims 1 to 4, characterized in that the rotor poles are formed by permanent magnets (2).

6. Machine according to one of claims 1 to 5, characterized in that a plurality of stator pole sets are provided, each of which has the same number of stator poles (5) and is supplied by a plurality of phases of a supply voltage.

7. Machine according to claim 6, characterized in that stator pole sets with a number of stator poles (5) corresponding to the number of phases of a supply voltage are provided.

8. Machine according to claim 6 or 7, characterized in that every stator pole (5) of a stator pole set has a winding for each supply voltage phase.

9. Electric machine with a separately excited rotor arrangement (1) for the generation of magnetic fields which follow one another in the movement direction (3) of the rotor, each magnetic field corresponding to a whole magnetic period, and with stator poles which are arranged so as to follow one another corresponding to the magnetic fields, characterized in that the magnetic fields which follow one another, each of which corresponds to a whole magnetic period, are formed by permanent magnet portions having alternately a magnetic north pole and a magnetic south pole, wherein separating gaps which extend diagonally to the movement direction of the rotor with alternately opposite angles of inclination are provided between the permanent magnet portions.

10. Machine according to claim 9, characterized in that the separating gaps are parts of an unique, continuous separating gap (9) by which magnet bodies (7, 8) extending in the movement direction and containing the permanent magnet portions are separated from one another, one of the magnet bodies (7, 8) comprising the magnet elements for the north poles and the other magnet body (7, 8) comprising the magnet elements for the south poles.

11. Machine according to claim 10, characterized in that the continuous separating gap has the shape of a sine curve (9b) or trapezoidal curve.

12. Machine according to one of claims 9 to 11, characterized in that the separating gap (6) or the continuous gap (9) varies in width.

13. Machine according to one of claims 9 to 12, characterized in that one or more stator poles are removed from a row of stator poles corresponding to the magnetic fields which follow one another, resulting in the formation of an electrically or/and mechanically unsymmetrical machine construction.

## Revendications

1. Machine électrique présentant un dispositif de rotor (1) à excitation séparée pour la création de champs magnétiques, successifs dans le sens de déplacement (3) du rotor et chaque fois correspondant aux cycles magnétiques entiers, et comportant des pôles de stator (5) disposés successivement le long de la disposition de rotor, le nombre de pôles de stator sur un cycle magnétique étant différent d'un nombre entier, caractérisée en ce qu'un décalage variable, provoqué par la difference, entre les cycles du champ magnétique et les pôles de stator est équilibré, au moins partiellement, par une alimentation correspondante décalée dans le temps des bobines des pôles de stator.

2. Machine selon la revendication 1, caractérisée en ce qu'on a prévu pour l'alimentation décalée dans le temps des circuits pour créer d'autres phases de tension d'alimentation à partir d'une tension d'alimentation polyphasée.

3. Machine selon la revendication 2, caractérisée en ce que les circuits sont formés par une connexion approprié des bobines des pôles de stator.

4. Machine selon la revendication 3, caractérisée en ce que des connexions incluant des connexions en étoile et/ou en triangle pour la création d'autres phases, sont réalisés à partir d'une tension d'alimentation triphasée.

5. Machines selon une quelconque des revendications 1 à 4, caractérisée en ce que les pôles du rotor sont formés par des aimants permanents (2).

6. Machine selon une quelconque des revendications 1 à 4, caractérisée en ce qu'on a prévu plusieurs groupes de pôles de stator présentant chaque fois le même nombre de pôles de stator (5) et étant chaque fois alimentés par plusieurs phases d'une tension d'alimentation.

7. Machine selon la revendication 6, caractérisée en ce qu'on a prévu des groupes de pôles de stator comportant un nombre de pôles de stator (5) correspondant au nombre de phases d'une tension d'alimentation.

8. Machine selon la revendication 6 ou 7, caractérisée en ce que chaque pôle de stator (5) d'un groupe de pôles de stators présente chaque fois une bobinage pour chaque phase de tension d'alimentation.

9. Machine électrique présentant un dispositif de rotor (1) à excitation séparée pour la création de champs magnétiques, successifs dans le sens de déplacement (3) du rotor et correspondant chaque fois à un cycle magnétique entier et comportant des pôles de stator disposés successivement correspondant des champs magnétiques, caracterisée en ce que les champs magnétiques successifs correspondant chaque fois à un cycle magnétique entier sont formés par des sections d'aimants permanents présentant alternativement un pôle magnétique nord et un pôle magnétique sud, des fentes de séparation étant prévues entre les sections d'aimants permanents, qui s'étendent en oblique avec un angle d'inclinaison alternativement opposé par rapport au sens de déplacement du rotor.

10. Machine selon la revendication 9, caractérisée en ce que les fentes de séparation sont des parties d'une seule fente de séparation (9) continue, par laquelle des corps magnétiques (7,8), qui s'étendent dans le sens du déplacement et qui comportent les sections d'aimants permanents, sont séparés les uns des autres, un des corps comprenant les éléments magnétiques pour le pôle nord et l'autre les éléments magnétiques pour le pôle sud.

11. Machine selon la revendication 10, caractérisée en ce que la fente de séparation continue présente la forme d'une courbe sinusoïdale (9b) ou trapézoïdale (9c).

12. Machine selon une quelconque des revendications 9 à 11, caractérisée en ce que la largeur de la fente de séparation (6) ou de la fente continue (9) varie.

13. Machine selon une quelconque des revendications 9 à 12, caractérisée en ce qu'on a éliminé un ou plusieurs pôles de stator d'une rangée de pôles de stator, correspondant aux champs magnétiques successifs, en formant une construction de machine électriquement et/ou mécaniquement asymétrique.
